# EUROPÄISCHE PATENTANMELDUNG

(11) **EP 2 441 606 A2**
(43) Veröffentlichungstag der Anmeldung: **18.04.2012**
(21) Anmeldenummer: 11008263.3
(22) Anmeldetag: 13.10.2011
(51) Int. Cl.: B60G 21/05

(54) **Verbundachse mit einer Verbundaufhängung**

(30) Priorität: 13.10.2010 DE 102010048179; 04.04.2011 DE 102011015964
(71) Anmelder: CP autosport GmbH, 33142 Büren (DE)
(72) Erfinder: Kälberer, Jürgen, 33129 Delbrück (DE)
(74) Vertreter: Liermann - Castell

(57) **Zusammenfassung**

Die Erfindung betrifft eine Verbundachse, die kinematisch bestimmt ist. Diese kann sowohl als gelenkte als auch als ungelenkte Achse ausgeführt werden. Damit ist es möglich, sämtliche fahrdynamischen Anforderungen an Fahrwerke zu erfüllen, dabei aber immer noch relativ einfach und somit zuverlässig und kostengünstig zu bleiben.

## Beschreibung

Die Erfindung betrifft eine Verbundachse.

Bei der Radführung wird grundlegend zwischen Starrachsen, Verbundachsen und Einzelradaufhängungen unterschieden. Nachfolgend werden kurz die bestehenden Radaufhängungen sowie ihre Nachteile erläutert.

Bei einer Starrachse werden zwei Räder am Radmittelpunkt quer zur Fahrtrichtung verbunden.

Bereits nachteilig ist, dass die Starrachse zwischen den Rädern relativ viel Bauraum beansprucht.

Der Hauptnachteil von Starrachsen ist jedoch ihr hohes Gewicht. Das typische Gewicht einer Achse (ohne Räder, Bremsen und Dämpfer) eines gehobenen Mittelklasse PKWs liegt bei einer Einzelradaufhängung bei ca. 55 kg, bei einer Starrachse dagegen bei ca. 90 kg.

Durch die starre Kopplung der beiden Räder kann eine für Starrachsen typische Schwingung erregt werden, das sogenannte Trampeln.

Einzelradaufhängungen sind Radführungen, die unabhängig vom anderen Rad einer Achse einfedern können.

Dies hat zunächst den Nachteil, dass fahrdynamisch gute Einzelradaufhängungen aus vielen Komponenten mit vielen Gelenken bestehen. Außerdem ist fast immer ein Fahrschemel, dass heißt ein gummigelagerter Hilfsrahmen, der am Fahrwerkslenker montiert ist, erforderlich. Beides führt zu höheren Kosten bei einer Einzelradaufhängung.

Weiter haben Einzelradaufhängungen elastokinematische Nachteile. Um die Übertragung von Abrollgeräuschen zu verhindern, müssen die Anbindungspunkte des Fahrwerks an den Aufbau in Gummi gelagert werden. Insbesondere Längskräfte wie Bremsen oder Beschleunigen können daher ein leichtes Lenken der Räder zur Folge haben und sich damit negativ auf die Fahrstabilität auswirken.

Schließlich haben Einzelradaufhängungen auch kinematische Nachteile.

Hierbei ist zunächst der sogenannte Sturz zu berücksichtigen.

Bei Einzelradaufhängungen bewegt sich das Rad sowohl beim parallelen Einfedern als auch beim Rollen des Fahrzeugs um seine Längsachse auf einer identischen Bahn. Die momentane Bewegung des Rades kann in jedem Punkt als Drehung um eine real existierende oder virtuelle Drehachse angesehen werden.

Fahrdynamisch sollte sich die Bewegungskurve des Rades jedoch beim beidseitigen Einfedern, entsprechend einem Nicken des Fahrzeugs beim Bremsen bzw. Beschleunigen, von der beim wechselseitigen Federn beim Rollen unterscheiden.

Beim parallelen beidseitigen Ein- bzw. Ausfedern sollten die Reifen für einen optimalen Kraftschluss möglichst senkrecht auf der Fahrbahn stehen. Die Räder sollten demnach nur eine Parallelverschiebung in Hochrichtung erfahren.

Bei Kurvenfahrt sollten sich die Räder dagegen auf einer Kreisbahn, deren Mittelpunkt sich in der Fahrzeugmitte befindet, bewegen. Dadurch wäre sichergestellt, dass die Kurvenneigung des Aufbaus sich nicht auf den Winkel zwischen Reifen und Fahrbahn, den sogenannten Sturz, überträgt und sich der Reifen mit dem Aufbau nach außen neigt.

Ein weiterer neben dem Sturz zu beachtender kinematischer Aspekt ist das Rollzentrum.

Das Rollzentrum beschreibt eine virtuelle Achse, um die sich der Fahrzeugaufbau bei Kurvenfahrt neigt. Der Abstand des Fahrzeugschwerpunktes zu dieser Achse bedingt wie stark und in welche Richtung sich der Aufbau neigt.

Theoretisch wäre ein hohes Rollzentrum wünschenswert, da so auch mit relativ weichen Federn die Aufbaubewegung gut kontrolliert werden könnte. Bei Einzelradaufhängungen ist dies jedoch nicht möglich.

Bei Einzelradaufhängungen erzeugt bei beidseitigem Einfedern ein hohes Rollzentrum unweigerlich eine große Geschwindigkeitskomponente des Radaufstandspunktes in Fahrzeugquerrichtung. Es kommt zu einer spurweiten Änderung. Dies wirkt sich negativ auf den Reifenverschleiß und die Fahrstabilität aus.

Bei Kurvenfahrt hingegen ist zusätzlich nachteilig, dass eine auf das Rad wirkende Seitenkraft eine Hochkraftkomponente zur Folge hat. Diese Hochkraft hebt den Fahrzeugaufbau und damit den Schwerpunkt bei Kurvenfahrt an, sogenannter Aufstützeffekt.

Die heute üblichen Verbundachsen sind Starrachsen, bei denen die Verbindung zwischen den Rädern dreh- und biegeelastisch ist. Die Kopplung zwischen rechter und linker Radführung führt zu einem kinematisch überbestimmten System. Damit diese Radführungen trotzdem funktionieren ist eine elastische Verformung des Koppelelements erforderlich.

Die Aufgabe der vorliegenden Erfindung ist es daher, die bestehenden Verbundachsen zu verbessern.

Die Aufgabe der hier vorliegenden Erfindung ist es, eine verbesserte Verbundachse zur Verfügung zu stellen.

Diese Aufgabe löst eine Verbundachse mit einer Verbundaufhängung, wobei die Verbundachse kinematisch bestimmt ist.

Um bei der kinematischen Auslegung von Radaufhängungen keine Kompromisse eingehen zu müssen, ist es Voraussetzung, dass sich das Rad beim parallelen Einfedern auf einer anderen Bahn bewegt als beim wechselseitigen Federn. Dies kann nur mit einer Verbundachse erreicht werden. Erst durch eine Verbundachse wird es möglich, dass die Radführungselemente der linken mit denen der rechten Seite so verbunden sind, dass sie deren kinematisches Verhalten in Abhängigkeit von ihrer eigenen Position beeinflussen können.

Dadurch ist es möglich, sämtliche fahrdynamische Anforderungen an Fahrwerke zu erhöhen, dabei aber immer noch relativ einfach und somit zuverlässig und kostengünstig zu bleiben. Alle bisher bekannten Radaufhängungen stellen immer nur Kompromisse dar. Vorteile in einem Bereich stehen immer Nachteilen in einem anderen Bereich gegenüber. Die erfindungsgemäße Verbundachse sieht vor, diesen Kreis zu durchbrechen, indem eine Verbundachse maßgeschneidert wird, die es erlaubt, einzelne Parameter unabhängig zu optimieren, ohne dass hier Konflikte mit anderen Parametern entstehen.

Eine kinematisch bestimmte Verbundaufhängung kann zielgerecht so entwickelt werden, dass keine Kompromisse mehr nötig sind.

Vorteilhafterweise besteht die Achse aus einer linken und einer rechten Seite, die in der Mitte gelenkig verbunden sind. So können Winkeländerungen zwischen den beiden Seiten der Achse aufgenommen werden. Eine gelenkige Verbindung kann beispielsweise auch durch ein verformbares Mittelteil gebildet werden, da lediglich geringe Winkeländerungen aufgenommen werden müssen.

Vorteilhafterweise sind die beiden Seiten so verbunden, dass Längs-, Quer- und Hochkräfte übertragbar sind und die beiden Seiten zueinander klappbar sind. Dadurch sind die Radführungselemente der linken Seite mit denen der rechten Seite so verbunden, dass sie deren kinematisches Verhalten in Abhängigkeit von ihrer eigenen Position beeinflussen können. Gleichzeitig ist es möglich, geringe Änderungen des Radabstandes zu bewerkstelligen.

Des Weiteren können die beiden Seiten jeweils eine Verbindung mit der Karosserie aufweisen, wobei diese Verbindung so ausgeführt ist, dass sie Längs- und Querkräfte aufnimmt, Verschiebungen in Hochrichtung und Verdrehungen jedoch zulässt.

Beim Einfedern, sei es einseitig oder beidseitig, werden so keine Kräfte in Hochrichtung übertragen.

Die Verbindung kann durch eine Kombination aus Kugelgelenk und Linearführung erfolgen. Auch ein Dreieckslenker ist möglich. Der Dreieckslenker hat hierbei den Vorteil, dass er platzsparender auszuführen ist. Zudem ist eine vollständig Abschirmung gegen Verunreinigungen bei einer Linearführung schwierig herzustellen.

Zusätzlich kann die Achse noch eine Anbindung an die Karosserie aufweisen. Diese Anbindung kann Kräfte in Längsrichtung aufnehmen, lässt jedoch Verschiebungen in Hoch- und Querrichtung und Verdrehungen zu. Die Anbindung kann eine Strebe mit zwei Kugelgelenken sein. Dies ist die einfachste Konstruktion.

Die Anbindung kann allerdings auch eine Wippe mit vier Kugelgelenken und einem Drehgelenk sein. Dies hat den Vorteil, dass die Wippe im äußeren Bereich nahe der Räder die auftretenden Kräfte aufnimmt. Zudem entsteht in der Achsmitte Raum für andere Bauteile.

Weiter kann es sich bei der kinematisch bestimmten Achse auch um eine gelenkte Achse handeln. Dies hat den Vorteil, dass das Rollzentrum für beide Achsen, die gelenkte und die ungelenkte Achse, eines Fahrzeuges auf eine Höhe gelegt werden kann. Insbesondere kann das Rollzentrum bei einer erfindungsgemäßen Achse tiefer gelegt werden.

Für eine gelenkte Achse kann jede Seite eine zusätzliche Drehachse aufweisen, die mit der Lenkstange verbunden ist. Die Lenkstange kann Querkräfte aufnehmen, Hochkräfte und Drehungen lässt sie jedoch zu.

Die Erfindung wird nachfolgend anhand von Ausführungsbeispielen unter Bezugnahme auf die Zeichnung näher erläutert.

Hierin zeigen
- Figur 1: eine schematische Darstellung der Verbundachse mit Kugelgelenk und Linearführung,
- Figur 2: eine schematische Darstellung der Verbundachse mit Dreieckslenker,
- Figur 3: eine schematische dreidimensionale Darstellung einer Verbundachse mit drei Anbindungspunkten an den Aufbau,
- Figur 4: eine schematische dreidimensionale Darstellung einer Verbundachse mit vier Anbindungspunkten an den Aufbau, hierbei zeigen 4a und 4b unterschiedliche Ansichten,
- Figuren 5, 6, 7 und 8: zeigen jeweils einen schematischen Vergleich zwischen einer Einzelradaufhängung und einer erfindungsgemäßen Verbundachse. Dabei befinden sich die zwei Achstypen in Figur 5a und 5b in Konstruktionslage. Figur 6a und 6b zeigt die beiden Achstypen beim Einfedern, wo hingegen Figur 7a und 7b die beiden Achstypen beim Ausfedern zeigt. In Figur 8 wird schließlich das Verhalten in einer Linkskurve verglichen.
- Figur 9: zeigt ein Ausführungsbeispiel einer ungelenkten Verbundachse,
- Figur 10: zeigt verschiedene Ansichten eines Ausführungsbeispiels einer gelenkten Verbundachse,
- Figur 10a: zeigt eine Vorderansicht des Ausführungsbeispiels einer gelenkten Verbundachse,
- Figur 10b: zeigt eine Seitenansicht des Ausführungsbeispiels einer gelenkten Verbundachse von unten,
- Figur 10c: zeigt eine Seitenansicht des Ausführungsbeispiels einer gelenkten Verbundachse von links,
- Figur 10d: zeigt eine isometrische Ansicht des Ausführungsbeispiels einer gelenkten Verbundachse.

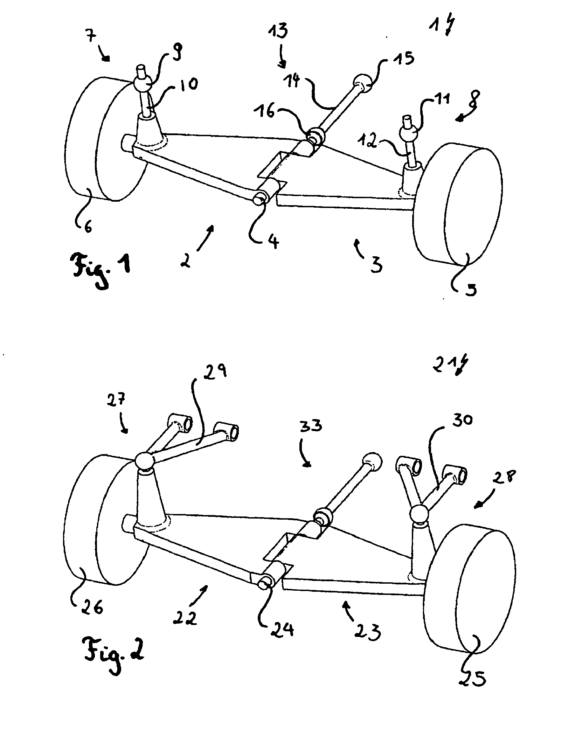

Die in Figur 1 dargestellte Achse 1 besteht aus einer linken Seite 2 und einer rechten Seite 3, die in der Mitte so durch ein Gelenk 4 verbunden sind, dass zwischen beiden Seiten Längs-, Quer- und Hochkräfte übertragen werden können, die bei den Seiten 2 und 3 jedoch zueinander eine Klappbewegung durchführen können. Weiter sichtbar in Figur 1 sind die beiden Räder 5 und 6, die an der Achse angebracht sind.

Des Weiteren besitzen die beiden Seiten 2 und 3 jeweils eine Verbindung mit der Karosserie 7 und 8. Diese jeweilige Verbindung 7 und 8 ist so ausgeführt, dass die Verschiebung in Hochrichtung und Verdrehungen zulässt, Längs- und Querkräfte jedoch übertragen werden. Diese Verbindung ist vorliegend durch je ein Kugelgelenk 9, 11 und eine Linearführung 10, 12 ausgebildet. Zusätzlich weist die Achse 1 noch eine Anbindung 13 an die Karosserie auf, die nur Kräfte in Längsrichtung aufnimmt, Verschiebungen in Hoch- und Querrichtung und Verdrehungen jedoch zulässt. Dies kann beispielsweise über eine Strebe 14 mit zwei Kugelgelenken 15 und 16 erfolgen.

Die in Figur 2 abgebildete Achse 21 mit den zwei Seiten 22 und 23, die durch das Gelenk 24 verbunden sind und die Räder 25 und 26 tragen, unterscheidet sich von der Achse in der Figur 1 lediglich dadurch, dass die beiden Verbindungen mit der Karosserie 27 und 28 statt Kugelgelenk 9 und 11 und Linearführung 10 und 12 je einen Dreieckslenker 29 und 30 aufweisen. Die Anbindung an die Karosserie 33 kann auch als Wippe mit zwei Anbindungspunkten außen in Radnähe mit vier Kugelgelenken und einem Drehgelenk ersetzt werden.

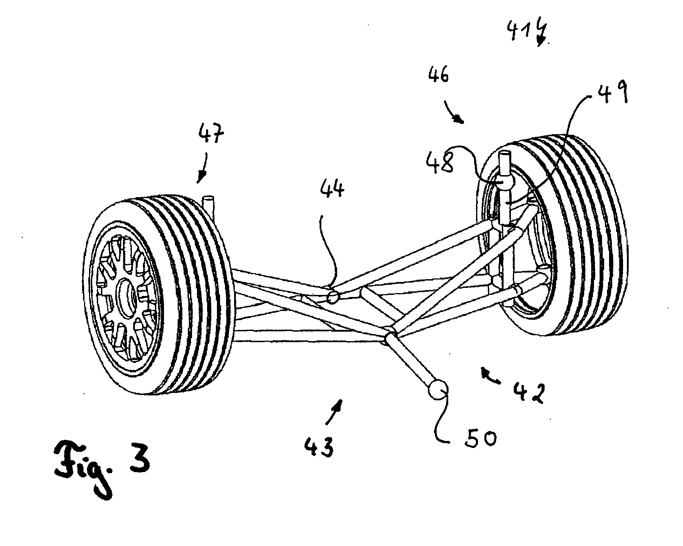

Figur 3 zeigt eine Achse 41 entsprechend dem schematischen Aufbau in Figur 1. Die linke Seite 42 und die rechte Seite 43 mit den Rädern 45 und 46 sind über das Gelenk 44 miteinander verbunden. Auch hier weist die Achse drei Anbindungspunkte 46, 47 (nicht sichtbar) und 53 auf. Die Anbindungspunkte 46 und 47 sind durch eine Linearführung 49 und ein Kugelgelenk 48 ausgestaltet.

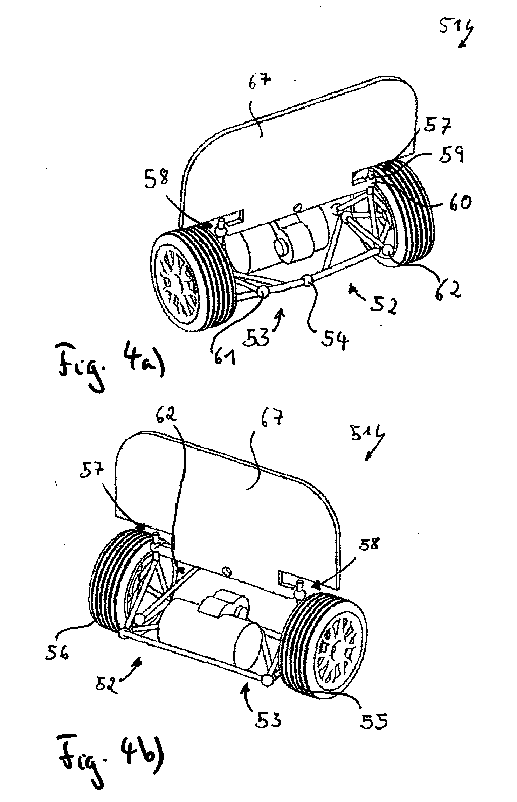

Die Figuren 4a und 4b zeigen eine Achse 51 in schematischer dreidimensionaler Darstellung mit einem Aufbau 67. Die Achse 51 weist vier Anbindungspunkte an die Karosserie auf. Sie besteht aus einer linken Hälfte 52 und einer rechten Hälfte 53 an der die Räder 55 und 56 befestigt sind. Des Weiteren besitzen die beiden Seiten jeweils eine Verbindung 57 und 58 und die linke und rechte Achshälfte 52 und 53 sind über ein Gelenk 54 verbunden. Hier erfolgt keine Befestigung an die Karosserie. Im Unterschied zur in Figur 3 dargestellten Achse weist die Achse der Figuren 4a und 4b zwei weitere Anbindungspunkte 61, 62 an die Karosserie auf, die Kräfte in Längsrichtung aufnehmen. Die oberen Verbindungen 57, 58 sind in Form einer Linearführung 59 mit einem Kugelgelenk 60 ausgestaltet.

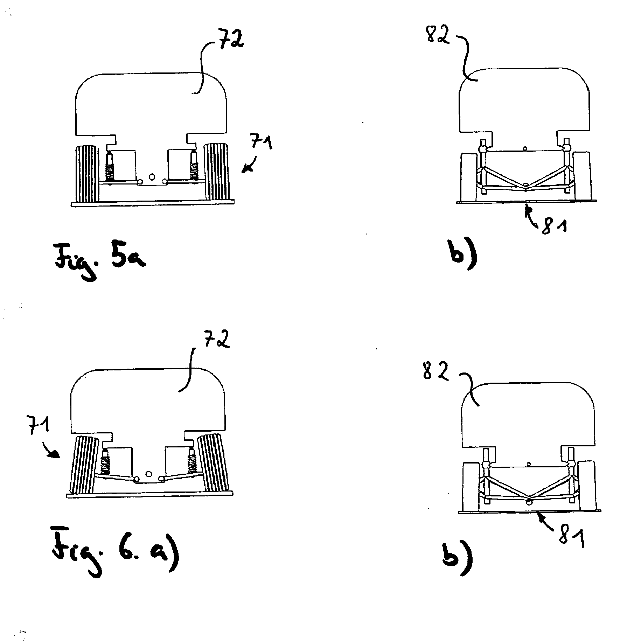

In den Figuren 5a bis 8b sind einige Situationen im Vergleich zwischen einer Einzelradaufhängung 71 mit der erfindungsgemäßen Verbundachse 81 jeweils mit einem Aufbau 72 beziehungsweise 82 im Fahrverhalten dargestellt. Bei der typischen Einzelradaufhängung 71 in Figur 5a sind die Querlenker mit dem Chassis verbunden. Im Vergleich dazu werden bei der in Figur 5b dargestellten Verbundachse 81 Seitenkräfte nur über die oberen Linearführungen auf das Chassis übertragen.

Dementsprechend führt ein in Figur 6a dargestelltes Einfedern bei einer Einzelradaufhängung 71 zu einer starken Sturzänderung in Richtung eines negativen Sturzes. Es kommt zu einer starken Spurweitenänderung. Bei der erfindungsgemäßen Verbundachse 81 in Figur 6b hingegen kommt es, da Hochkräfte nicht übertragen werden, sondern sich der Aufbau 82 auf der Linearführung bewegen kann, zu keiner Sturzänderung. Auch eine Spurweitenänderung erfolgt nicht.

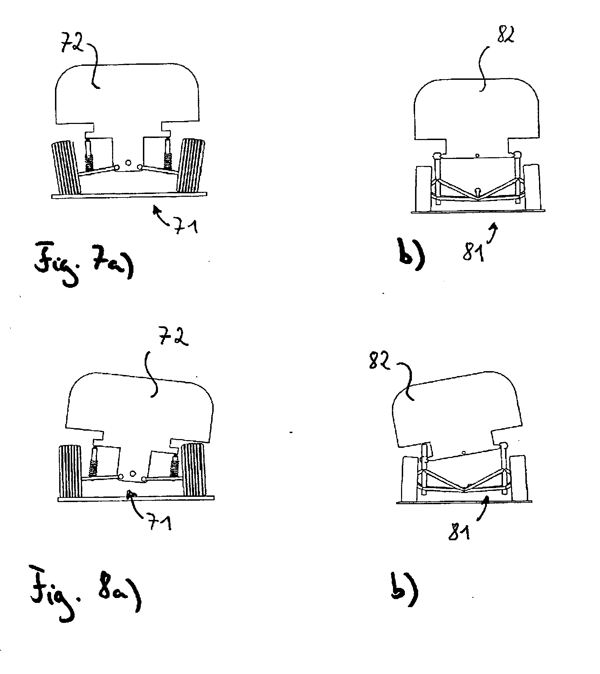

Auch bei einem Ausfedern wie in Figur 7a dargestellt, kommt es bei einer typischen Einzelradaufhängung 71 zu einer starken Sturzänderung. Diesmal in Richtung eines positiven Sturzes. Dieser hat erneut eine starke Spurweitenänderung zur Folge. Da bei einer erfindungsgemäßen Verbundachse 81 in Figur 7b erneut keine Hochkräfte übertragen werden, kommt es zu keiner Sturzänderung. Auch eine Spurweitenänderung erfolgt nicht.

Bei einer Linkskurve wie in Figur 8a dargestellt, kommt es bei einer typischen Einzelradaufhängung 71 erneut zu einer Sturzänderung aufgrund eines bei Einzelradaufhängungen typischer Weise tiefliegenden Rollzentrums neigt sich der Aufbau 72 aus der Kurve. Bei der erfindungsgemäßen Verbundachse 81 in Figur 8b hingegen kommt es auch beim einseitigen Einfedern nicht zu einer Sturzänderung, da auch hier keine Hochkräfte übertragen werden. Wird das Rollzentrum sehr hoch gelegt, wie es bei einer erfindungsgemäßen Verbundachse 81 möglich ist, neigt sich der Aufbau 82 in die Kurve.

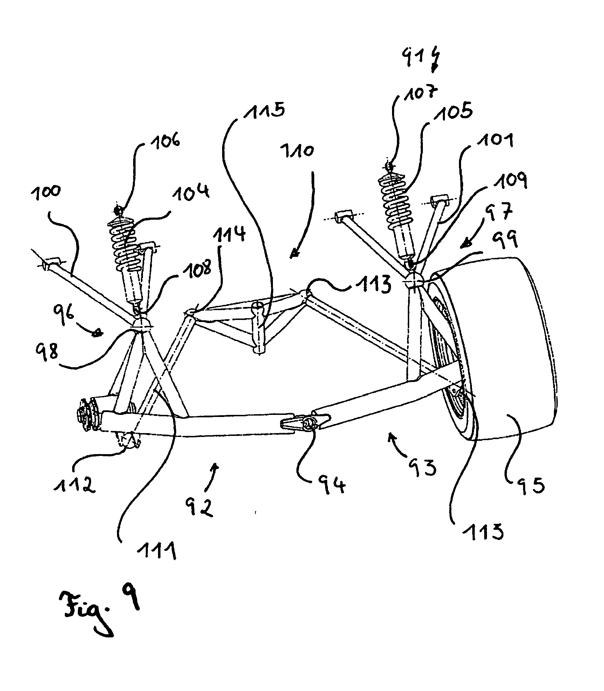

Bei der in Figur 9 dargestellten Achse 91 sind erneut die beiden Achshälften 92 und 93 vorhanden. Diese sind über ein Drehgelenk 94 verbunden. Hier ist nur ein Rad 95 an der Achse dargestellt. Die beiden Verbindungen mit der Karosserie 96 und 97 erfolgen über Kugelgelenke 98 und 99 in Verbindung mit einem Dreieckslenker 100, 101. Dieser wiederum ist über ein Drehgelenk 102, 103 mit dem Chassis verbindbar. Die Dämpfer 104, 105 sind ebenfalls jeweils über Kugelgelenke 108, 109 mit dem Achskörper verbunden und auf der anderen Seite ebenfalls durch Kugelgelenke 106, 107 mit dem Chassis verbunden. Die Anbindung an die Karosserie, die nur Kräfte in Längsrichtung aufnimmt 110, ist in Form einer Wippe 111 ausgestaltet. Dadurch ist es möglich, die Kräfte über Kugelgelenke 111, 112 außen einzuleiten und so Biegekräfte zu verringern. Zudem entsteht in der Mitte Bauraum für andere Bauteile. Auch im hinteren Bereich weist die Wippe Kugelgelenke 113, 114 auf, bevor sie über ein Drehgelenk 115 mit dem Chassis verbunden wird. Auch hier sind die Verbindungen 96, 97 so ausgestaltet, dass sie Verschiebungen in Hochrichtung und Verdrehungen zulassen, Längs- und Querkräfte jedoch übertragen werden. Die Anbindung 110 hingegen nimmt nur Kräfte in Längsrichtung auf, Verschiebungen in Hoch- und Querrichtung und Verdrehungen lässt sie jedoch zu.

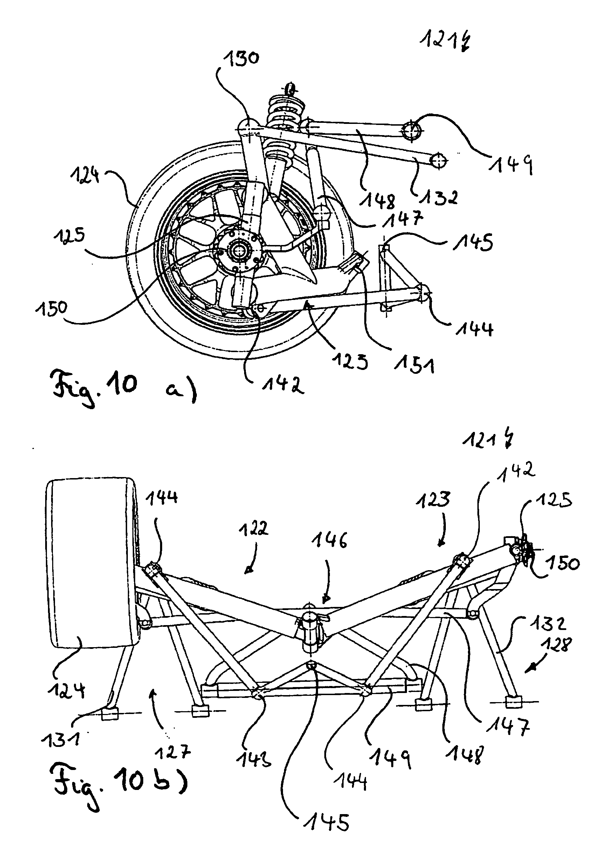

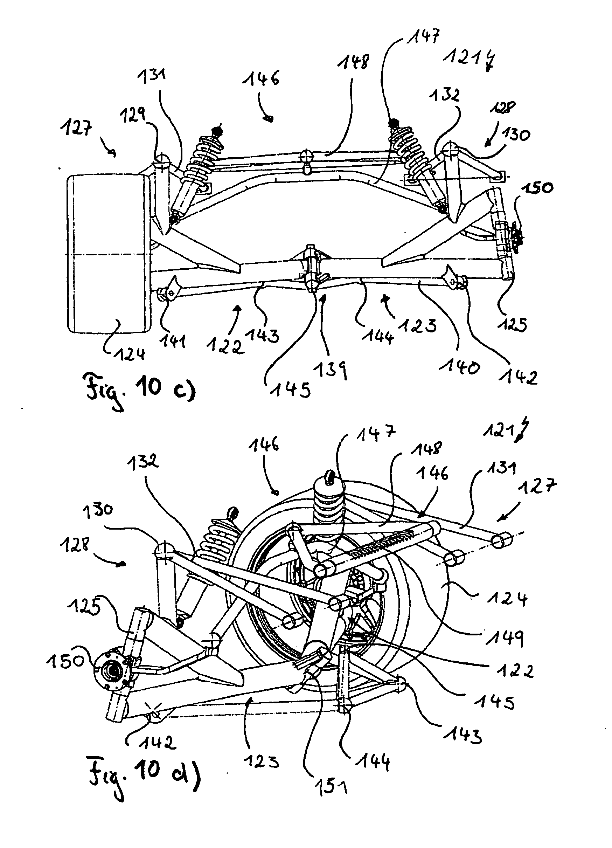

Die Figuren 10a bis d zeigen verschiedene Ansichten eines erfindungsgemäßen Achsaufbaus für eine gelenkte Achse 121. Diese weist ebenfalls zwei Achsseiten 122, 123 auf. Das Rad 124 ist vorliegend über ein Drehgelenk wie 125 und den Radträger 150 mit der Achse 121 verbunden. Die beiden Achsteile 122, 123 sind ebenfalls über ein Drehgelenk 126 miteinander verbunden. Auch diese Form der Achskonstruktion weist zwei Verbindungen 127, 128 mit dem Aufbau auf. Vorliegend wird die Verbindung durch ein Kugelgelenk 129, 130 vorgenommen, das über einen Längslenker 131, 132 mit dem Chassis verbunden ist. Die Anbindung 139 der Achse 121 an die Karosserie, die nur Kräfte in Längsrichtung aufnimmt, ist vorliegend durch eine Wippe 140 erfolgt. Diese ist mit zwei Kugelgelenken 141, 142 mit der linken und der rechten Achsseite 122, 123 verbunden. Über zwei weitere Kugelgelenke 143, 144 und ein Drehgelenk 145 ist diese Wippe mit dem Chassis verbunden. Zusätzlich zur gelenkten Achse in den vorangegangenen Figuren weist die gelenkte Achse in Figur 6 eine Lenkungsstange 146 auf. Diese besteht aus einer Lenkungskoppel 147 und einem Lenkungslängslenker 148, der über ein Schiebegelenk mit einer Zahnstange 149 mit dem Chassis verbunden ist. So ist es möglich, nicht nur die ungelenkte Achse, sondern auch die gelenkte Achse erfindungsgemäß auszuführen. Erst damit wird es möglich, das Rollzentrum für beide Achsen möglichst niedrig zu halten, was zu einem verbesserten Kurvenverhalten führt.

## Patentansprüche

1. Verbundachse mit einer Verbundaufhängung, ***dadurch gekennzeichnet, dass*** die Verbundachse kinematisch bestimmt ist.

2. Verbundachse insbesondere nach Anspruch 1, ***dadurch gekennzeichnet, dass*** die Achse aus einer rechten und einer linken Achsseite besteht, die in der Mitte gelenkig verbunden sind.

3. Verbundachse nach Anspruch 2, ***dadurch gekennzeichnet, dass*** zwischen den beiden Achsseiten Längs-, Quer- und Hochkräfte übertragbar sind, die beiden Seiten jedoch zueinander klappbar sind.

4. Verbundachse nach einem der Ansprüche 2 oder 3, ***dadurch gekennzeichnet, dass*** die beiden Seiten jeweils eine Verbindung mit der Karosserie aufweisen, wobei die Verbindung Längs- und Querkräfte aufnimmt, Hochkräfte und Verdrehungen jedoch zulässt.

5. Verbundachse nach Anspruch 4, ***dadurch gekennzeichnet, dass*** die Verbindung eine Kombination aus Kugelgelenk und Linearführung aufweist.

6. Verbundachse nach Anspruch 4, ***dadurch gekennzeichnet, dass*** die Verbindung ein Dreieckslenker ist.

7. Verbundachse nach einem der Ansprüche 2 bis 6, ***dadurch gekennzeichnet, dass*** die Achse eine Anbindung an die Karosserie aufweist, wobei die Anbindung Kräfte in Längsrichtung aufnimmt, Verschiebungen in Hoch- und Querrichtungen jedoch zulässt.

8. Verbundachse nach Anspruch 7, ***dadurch gekennzeichnet, dass*** die Anbindung eine Strebe mit Kugelgelenken ist.

9. Verbundachse nach Anspruch 7, ***dadurch gekennzeichnet, dass*** die Anbindung eine Wippe mit vier Kugelgelenken und einem Drehgelenk ist.

10. Achse nach einem der Ansprüche 2 bis 9, ***dadurch gekennzeichnet, dass*** jede Seite eine zusätzliche Drehachse aufweist, die mit der Lenkstange verbunden ist, wobei die Lenkstange Querkräfte aufnimmt, Hochkräfte und Verdrehungen jedoch zulässt.
